# EUROPÄISCHE PATENTSCHRIFT

(11) **EP 1 038 735 B1**
(45) Veröffentlichungstag und Bekanntmachung des Hinweises auf die Patenterteilung: **28.04.2004**
(21) Anmeldenummer: 00102293.8
(22) Anmeldetag: 17.02.2000
(51) Int. Cl.: B60R 21/13

(54) **Überrollschutz für Cabrio-Insassen**
Roll-over protection for passengers in open vehicles
Arceau de sécurité pour des passagers dans un vehicule cabriolet

(30) Priorität: 20.03.1999 DE 19912676
(43) Veröffentlichungstag der Anmeldung: 27.09.2000
(73) Patentinhaber: Volkswagen Aktiengesellschaft, 38436 Wolfsburg (DE)
(72) Erfinder: Hövelmann, Klaus, 38551 Ribbesbüttel (DE)

(56) Entgegenhaltungen:
- DE-A- 3 445 262
- DE-A- 19 540 819
- DE-A- 19 734 963
- DE-U- 8 523 831
- US-A- 5 094 478

## Beschreibung

Die Erfindung betrifft einen Überrollschutz gemäß dem Oberbegriff des Patentanspruchs 1.

Ein gattungsgemäßer Überrollschutz, wie er aus der DE 43 45 394 C2 oder der EP-A-0 623 492 bekannt ist, mit den Sitzen individuell zugeordneten und demgemäß relativ schmalen Überollbügeln, denen auch individuelle fahrzeugfeste Führungen zugeordnet sind, bietet gegenüber einem den benachbarten Sitzen gemeinsamen, relativ breiten Überrollschutz, wie ihn beispielsweise die DE 41 00 506 C1 zeigt, den Vorteil, daß bei den Bewegungen infolge der wesentlich geringeren Breite der Führungen die Neigung zum Verkanten minimal ist. Ein derartiger "Schubkasteneffekt" tritt um so eher auf, je breiter die Führung für das jeweils zu bewegende Teil ist.

Ein Nachteil eines gattungsgemäßen Überrollschutzes gegenüber einem mehreren Sitzen gemeinsamen Überrollschutz ist jedoch darin zu sehen, daß Krafteinwirkungen bei einem Unfall im wesentlichen auf einzelne der Überrollbügel begrenzt sind, diese Überrollbügel bzw. dieser einzelne Überrollbügel also sehr stark beansprucht werden bzw. wird, während der Überrollbügel des Nachbarsitzes von Kräften praktisch unbeaufschlagt ist.

Nun ist aus der DE 85 23 831 U1 ein Überrollschutz mit individuellen Überrollbügeln bekannt, zwischen denen horizontal verlaufend eine kraftübertragende Stange angeordnet ist. Diese Konstruktion, die also eine Zusammenfassung der an sich sitzindividuellen Überrollbügel zur Kraftübertragung darstellt, bezieht sich jedoch auf Überrollbügel, die starr am Fahrzeug befestigt, also nicht zwischen Ruhelagen und Betriebsstellungen verschiebbar oder verfahrbar sind. Es ist auch nicht zu sehen, wie diese also für fest eingebaute Überrollbügel vorgesehene, starr an den beiden Bügeln befestigte Stange bei einem gattungsgemäßen Überrollschutz mit bewegbaren Überrollbügeln Einsatz finden kann, ohne daß an die Synchronität der Bewegungen beider Überrollbügel zwischen ihren Ruhelagen und ihren Betriebsstellungen sehr hohe Ansprüche gestellt werden müssen. Auch würde die Gefahr bestehen, daß durch diese starr mit den beiden Überrollbügeln verbundene Stange im Endergebnis eine breite Anordnung geschaffen werden würde, die wiederum zu Verklemmen neigen könnte.

Der Erfindung liegt die Aufgabe zugrunde, einen gattungsgemäßen Überrollschutz unter Wahrung seiner Vorteile dahingehend zu verbessern, daß ohne Erfordernis einer hohen Syncronität der Bewegungen der beiden sitzindividuellen Überrollbügel bei einem Unfall eine Kraftverteilung auf alle Bügel sichergestellt ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Die Erfindung beschränkt sich also nicht auf die Übertragung der bei fest eingebauten Überrollbügeln bekannten, im wesentlichen horizontal verlaufenden Stange zwischen beiden als Stütze, sondern sieht eine bestimmte Anlenkung und Ausbildung der Stütze vor, nämlich hinsichtlich der Anlenkung so, daß die Stütze kleineren Relativbewegungen zwischen den beiden Überrollbügeln richtungsmäßig folgen und sie ihre Länge so verändern kann, daß kleine Änderungen des Abstands der Anlenkstellen an den beiden Überrollbügeln gleichsam kompensiert werden. Auf jeden Fall muß aber die Längenveränderbarkeit der Stütze so realisiert sein, daß bei in ihren endgültigen Betriebsstellungen befindlichen Überrollbügeln eine weitere Längenverkürzung der Stütze praktisch nicht möglich ist, sondern sie dann ihre Stützlänge bewahrt.

Ein Ausführungsbeispiel der Erfindung wird im folgenden anhand der Zeichnung erläutert, deren Figuren 1 und 2 eine Vorderansicht des erfindungsgemäßen Überrollschutzes bei in ihren Ruhelagen bzw. ihren Betriebsstellungen befindlichen Überrollbügeln zeigt, während die Figuren 3 und 4 teilweise im Schnitt eine mögliche Ausführungsform der Stütze wiedergeben.

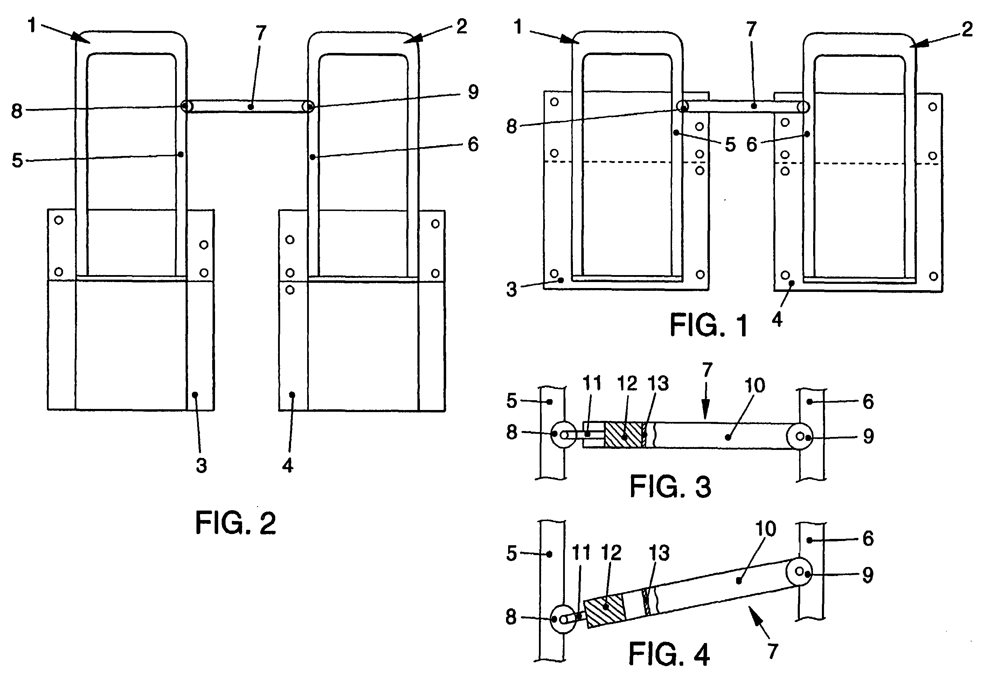

Betrachtet man zunächst Figur 1, so erkennt man bei 1 und 2 die beiden individuell nicht dargestellten Fahrzeugsitzen zugeordneten Überrollbügel. Bei 3 und 4 sind cassettenartige individuelle Bewegungsführungen für die beiden Überrollbügel 1 und 2 angedeutet; diese Führungen sind fahrzeugfest.

Während Figur 1 also die beiden Überrollbügel 1 und 2 in ihren abgesenkten Ruhelagen wiedergibt, zeigt Figur 2 die Stützen 1 und 2 in ihren ausgefahrenen Betriebsstellungen. Sie ragen dann über die Köpfe der Fahrzeuginsassen hinaus, so daß sie diese bei einem Überrollunfall schützen.

Würde beispielsweise auf den Überrollbügel 1 bei einem Unfall eine Kraft einwirken, die nicht von oben, sondern beispielsweise schräg von der Seite kommt, so würde diese Kraft allein auf den Bügel 1 und seine Führung 3 nebst deren Befestigung im Fahrzeug wirken, so daß die durch die Teile 1 und 3 gebildete Teilanordnung sehr hoch beansprucht werden würde. Um dieser hohen Beanspruchung entgegenzuwirken, sieht die Erfindung zwischen den sich gegenüberliegenden Bereichen 5 und 6 die im wesentlichen horizontal verlaufende Stütze 7 vor, die bei 8 und 9 an den beiden Bügelbereichen 5 und 6 in einer Ebene schwenkbar angelenkt ist, die in der Darstellung der Figuren 1 und 2 in der Zeichenebene liegt, also auch die Richtung der möglichen Bewegungen der Bügel 1 und 2 enthält. Durch diese Stütze werden also bei ausgefahrenen Überrollbügeln 1 und 2 (Figur 2) auf nur einen der Bügel 1 oder 2 wirkende Unfallkräfte teilweise über die Stütze 7 auf den jeweils anderen Bügel 2 bzw. 1 weitergeleitet, so daß eine Entlastung des unmittelbar betroffenen Bügels sichergestellt ist.

Eine starre Anordnung der Stütze 7 zwischen den beiden Bügeln 1 und 2 würde eine absolute Synchronität der Bewegungen der beiden Bügel 1 und 2 zwischen ihren Ruhelagen (Figur 1) und ihren Betriebsstellungen (Figur 2) erfordern. Zudem könnte es bei den Bügelbewegungen zu Verklemmungen in den Führungen 3 und 4 kommen. Dem wird erfindungsgemäß durch zwei Maßnahmen entgegengewirkt:

Zum einen ist die Stütze 7 nicht starr, sondern über Schwenklager 8 und 9 an den Bügeln 1 und 2 angelenkt, und zum anderen ist ihre Länge veränderbar, allerdings mit der Einschränkung, daß Mittel vorgesehen sind, die eine Verringerung der Länge der Stütze 7 über eine durch den Stützeffekt vorgegebene Mindestlänge verhindert.

Betrachtet man nun Figur 3, so ist dort teilweise im Schnitt etwas vergrößert eine Ausführungsmöglichkeit für die Stütze 7 wiedergegeben. Die Stütze 7 enthält zwei teleskopierende rohr- bzw. stangenartige Bestandteile 10 und 11, von denen der innenliegende Bestandteil 11 mit der kolbenartigen Gleitführung 12 versehen ist, während der rohrförmige äußere Bestandteil 10 der Stütze 7 bei 13 einen inneren Anschlag aufweist. Dieser kann durch eine eingesetzte Scheibe, eine örtliche Querabmessungsverringerung, einen Kragen am Teil 11 oder einen Querstift realisiert sein. Er liegt, wie Figur 3 zeigt, so, daß eine zur Abstützung der beiden Überrollbügel 1 und 2, hier wiedergeben durch die definierten Bereiche 5 und 6, erforderliche Mindestlänge der Stütze 7 sichergestellt ist.

Wie Figur 4 dagegen zeigt, kann die die Stütze 7 bildende Teleskopanordnung bei Relativbewegungen der beiden Überrollbügel 1 und 2 in senkrechter Richtung durch Vergrößerung ihrer Länge nachgeben, so daß bei Verwendung getrennter Antriebe für die beiden Überrollbügel 1 und 2 keine engen Toleranzen bezüglich des Synchronismus der Bewegungen beider Bügel 1 und 2 eingehalten werden müssen. Man erkennt in Figur 4 auch deutlich, daß sich der Kolben 12 jetzt von dem Anschlag 13 etwas entfernt hat.

Mit der Erfindung ist demgemäß mit überraschend einfachen Mitteln ein gattungsgemäßer Überrollschutz geschaffen, der ohne Beeinträchtigung der Bewegungsverhältnisse der beiden Überrollbügel 1 und 2 bei einem Unfall eine Kraftverteilung auf die beiden Bügel sicherstellt.

## Patentansprüche

1. Überrollschutz für Cabrio-Insassen mit benachbarten Fahrzeugsitzen zugeordneten individuellen Überrollbügeln (1, 2), die zwischen abgesenkten Ruhelagen und demgegenüber erhöhten Betriebsstellungen in individuellen fahrzeugfesten Führungen bewegbar sind, **dadurch gekennzeichnet, daß** zwischen einander zugekehrten Bereichen (5, 6) der beiden Überrollbügel (1, 2) eine Stütze (7) angeordnet ist, die im wesentlichen in gleicher Höhe an den beiden einander zugekehrten Bereichen (5, 6) in einer die Bewegungsrichtung enthaltenden Ebene schwenkbar angelenkt (8, 9) ist und unter Wahrung einer Mindestlänge, die dem Abstand zwischen den Bereichen (5, 6) bei in ihren Betriebsstellungen befindlichen Überrollbügeln (1, 2) entspricht, längenveränderbar ausgelegt ist.

2. Überrollschutz nach Anspruch 1, **dadurch gekennzeichnet, daß** die Stütze (7) zwei bis zum Wirksamwerden eines Anschlags (13) ineinander schiebbare Teleskopstangen (10, 11) enthält.

3. Überrollschutz nach Anspruch 2, **dadurch gekennzeichnet, daß** der inneren der beiden Teleskopstangen (11) eine Gleitführung (12) in der äußeren Teleskopstange (10) zugeordnet ist.

## Claims

1. Roll-over protective structure for occupants of a convertible, having individual roll bars (1, 2) which are assigned to adjacent vehicle seats and can be moved in individual guides, which are fixed on the vehicle, between retracted inoperative positions and operational positions which are raised in relation thereto, **characterized in that** a support (7) is arranged between mutually facing regions (5, 6) of the two roll bars (1, 2), the said support being coupled pivotably (8, 9) essentially at the same height to the two mutually facing regions (5, 6) in a plane containing the direction of movement, and being designed such that it can be changed in length while maintaining a minimum length, which corresponds to the distance between the regions (5, 6) with the roll bars (1, 2) in their operational positions.

2. Roll-over protective structure according to Claim 1, **characterized in that** the support (7) contains two telescopic rods (10, 11) which can be pushed into each other until a stop (13) becomes effective.

3. Roll-over protective structure according to Claim 2, **characterized in that** the inner of the two telescopic rods (11) is assigned a sliding guide (12) in the outer telescopic rod (10).

## Revendications

1. Protection contre le renversement pour les occupants d'un cabriolet avec des arceaux de sécurité (1, 2) individuels associés à des sièges de véhicules voisins, qui peuvent être déplacés entre des positions de repos abaissées et des positions de fonctionnement relevées par rapport à celles-ci dans des glissières individuelles fixées au véhicule, **caractérisée en ce que** l'on prévoit entre des régions tournées l'une vers l'autre (5, 6) des deux arceaux de sécurité (1, 2) un montant (7) qui est articulé (8, 9) de manière à pouvoir pivoter dans un plan contenant le sens de déplacement, essentiellement à la même hauteur au niveau des deux régions tournées l'une vers l'autre (5, 6) et qui est conçu avec une longueur variable en conservant une longueur minimale qui correspond à la distance entre les régions (5, 6) lorsque les arceaux de sécurité (1, 2) se trouvent dans leurs positions de fonctionnement.

2. Protection contre le renversement selon la revendication 1, **caractérisée en ce que** le montant (7) contient deux tiges télescopiques (10, 11) pouvant être enfoncées l'une dans l'autre jusqu'à l'activation d'une butée (13).

3. Protection contre le renversement selon la revendication 2, **caractérisée en ce qu'**une glissière (12) dans la tige télescopique extérieure (10) est associée à la tige intérieure (11) des deux tiges télescopiques.
